# EUROPÄISCHE PATENTANMELDUNG

(11) **EP 2 023 019 A1**
(43) Veröffentlichungstag der Anmeldung: **11.02.2009**
(21) Anmeldenummer: 07015535.3
(22) Anmeldetag: 07.08.2007
(51) Int. Cl.: F16H 61/32

(54) **Schaltkraft-Unterstützungsvorrichtung für ein Getriebe**

(71) Anmelder: Hoerbiger Antriebstechnik GmbH, 86956 Schongau (DE)
(72) Erfinder: Fürguth, Werner, 87640 Biessenhofen/Altdorf (DE)
(74) Vertreter: Hager, Thomas Johannes

(57) **Zusammenfassung**

Die Erfindung betrifft eine Schaltkraft-Unterstützungsvorrichtung (1) für eine mit einem inneren und einem äußeren Schaltzug (3 bzw. 4) versehene Schaltung (2) eines Getriebes, gekennzeichnet durch eine rotatorische Servo-Antriebseinrichtung (5), die mit dem äußeren Schaltzug (4) der Schaltung (2) verbindbar ist.

## Beschreibung

Die Erfindung betrifft eine Schaltkraft-Unterstützungsvorrichtung gemäß dem Oberbegriff des Anspruches 1.

Eine derartige Schaltkraft-Unterstützungsvorrichtung ist aus der EP 06004984.8 bekannt.

Es ist Aufgabe der vorliegenden Erfindung, eine Schaltkraft-Unterstützungsvorrichtung der im Oberbegriff des Anspruches 1 angeordneten Art zu schaffen, die vorzugsweise auch bei einem Systemausfall eine manuelle Schaltung des Getriebes weiterhin ermöglicht.

Die Lösung dieser Aufgabe erfolgt durch die Merkmale des Anspruchs 1.

Die Unteransprüche haben vorteilhafte Weiterbildungen der Erfindung zum Inhalt.

Dadurch, dass bei einer besonders bevorzugten Ausführungsform die Unterstützungsvorrichtung (Servovorrichtung) durch eine zuschaltbare Kupplung mit der äußeren Schaltung (Schaltzug zum Getriebe) des Getriebes verbindbar ist, ist es vorteilhafterweise möglich, auch bei einem ausgeschalteten Unterstützungssystem bzw. einem Systemausfall eine manuelle Schaltung aufrechtzuerhalten, da die Unterstützungsvorrichtung in diesem Fall von dem äußeren Schaltzug der Schaltung des Getriebes entkoppelbar ist, so dass die Bedienbarkeit der Schaltung bzw. des Getriebes auch in diesem Falle gewährleistet ist.

Weitere Einzelheiten, Vorteile und Merkmale der vorliegenden Erfindung ergeben sich aus nachfolgender Beschreibung eines Ausführungsbeispiels anhand der beigefügten Zeichnung. Es zeigt:
- Fig. 1: eine schematisch stark vereinfachte Vorderansicht einer erfindungsgemäßen Schaltkraft- Unterstützungsvorrichtung, und
- Fig. 2: eine vereinfachte Seitenansicht der Schaltkraft-Unterstützungsvorrichtung 1 gemäß Fig. 1.

Die Schaltkraft-Unterstützungsvorrichtung 1 ist für eine symbolisch durch den Block 2 dargestellte Schaltung vorgesehen, die einen inneren Schaltzug 3 aufweist, der zu einem Schalthebel 9 führt. Die Schaltung 2 weist ferner einen äußeren Schaltzug 4 auf, der zum Fahrzeuggetriebe führt, das in der Zeichnung nicht dargestellt ist.

Die erfindungsgemäße Unterstützungsvorrichtung 1 weist eine Servo-Antriebseinrichtung 5 auf, die vorzugsweise über eine symbolisch dargestellte schaltbare Kupplung 6 mit dem äußeren Schaltzug 4 der Schaltung 2 durch Einkuppeln der Kupplung 6 verbindbar ist.

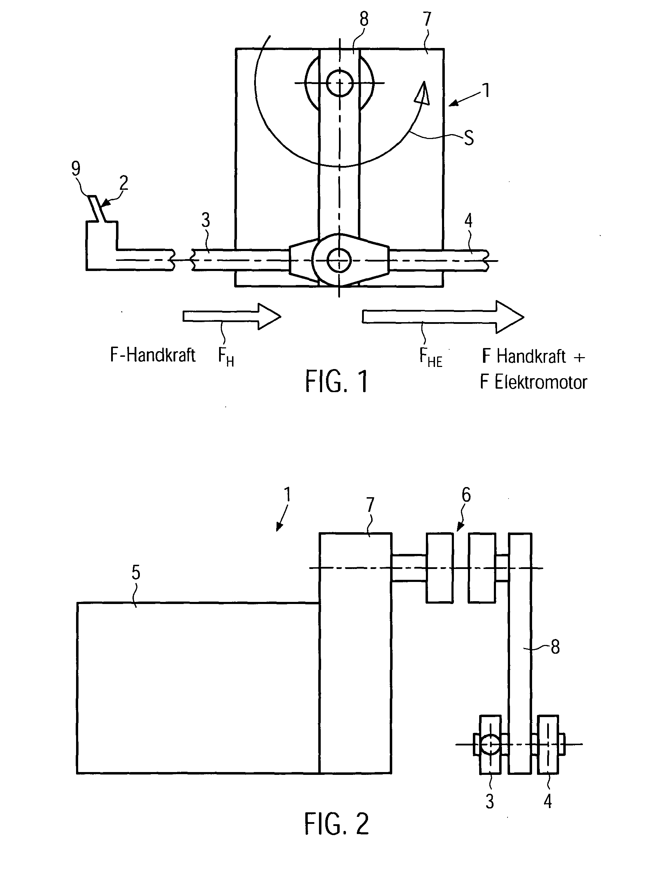

Bei der dargestellten Ausführungsform ist die Antriebseinrichtung als Getriebemotor ausgebildet, der einen Elektromotor 5 und ein Getriebe 7 umfasst, das vorzugsweise über die schaltbare Kupplung 6 mit einem Hebel 8 verbindbar ist, der wiederum mit dem inneren und dem äußeren Schaltzug 3 bzw. 4 verbunden ist. Aus der Zusammenschau der Fig. 1 und 2 wird deutlich, dass die mittels des Schalthebels 9 der Schaltung 2 aufgebrachte Handkraft F_{H} durch die Schaltkraft-Unterstützungseinrichtung 1 verstärkt wird, da der sich gemäß dem Pfeil S drehende Hebel 8 dieser Handkraft F_{H} eine durch den Elektromotor 5 erzeugte Kraft als Unterstützungskraft überlagert, so dass am äußeren Schaltzug 4 eine Gesamtkraft F_{HE} anliegt.

Die Antriebseinrichtung ist bei der dargestellten Ausführungsform als Elektromotor ausgebildet, kann aber auch als rotatorischer Elektromotor ausgebildet sein.

Die schaltbare Kupplung 6 kann sowohl elektrisch als auch mechanisch oder hydraulisch ausgeführt sein.

Ferner ist es möglich, dass die in den Fig. 1 und 2 nicht dargestellte Fahrzeugkupplung gleichzeitig die schaltbare Kupplung 6 betätigt.

### Bezugszeichenliste

- 1: Schaltkraft-Unterstützungsvorrichtung (Servovorrichtung)
- 2: Schaltung
- 3: Innerer Schaltzug
- 4: Äußerer Schaltzug
- 5: Servo-Antriebseinrichtung
- 6: Schaltbare Kupplung
- 7: Getriebe
- 8: Hebel
- 9: Schalthebel
- F_{H}: Kraftpfeil der Handkraft (aufgebracht durch Schalthebel 9)
- F_{HE}: Kraftpfeil der Handkraft und E-Motorkraft
- S: Drehrichtungspfeil des Hebels 8

## Patentansprüche

1. Schaltkraft-Unterstützungsvorrichtung (1) für eine mit einem inneren und einem äußeren Schaltzug (3 bzw. 4) versehene Schaltung (2) eines Getriebes, **gekennzeichnet durch** eine rotatorische Servo-Antriebseinrichtung (5), die mit dem äußeren Schaltzug (4) der Schaltung (2) verbindbar ist.

2. Unterstützungsvorrichtung nach Anspruch 1, **dadurch gekennzeichnet, dass** die Antriebseinrichtung (5) als Elektromotor ausgebildet ist.

3. Unterstützungsvorrichtung nach Anspruch 2, **dadurch gekennzeichnet, dass** der Elektromotor als Getriebemotor (5, 7) ausgebildet ist.

4. Unterstützungsvorrichtung nach einem der Ansprüche 1 bis 3, **dadurch gekennzeichnet, dass** die Antriebseinrichtung (5) über einen Hebel (8) mit dem äußeren Schaltzug (4) verbunden ist.

5. Unterstützungsvorrichtung nach einem der Ansprüche 1 bis 4, **dadurch gekennzeichnet, dass** zwischen der Servo-Antriebseinrichtung (5) und dem äußeren Schaltzug (4) eine Schaltkraftkupplung (6) angeordnet ist.

6. Unterstützungsvorrichtung nach Anspruch 5, **dadurch gekennzeichnet, dass** die schaltbare Kupplung (6) elektrisch, mechanisch oder hydraulisch ausgebildet ist.

7. Unterstützungsvorrichtung nach Anspruch 5 oder 6, **dadurch gekennzeichnet, dass** die schaltbare Kupplung (6) durch die Kupplung des Getriebes betätigbar ist.
